# EUROPÄISCHE PATENTSCHRIFT

(11) **EP 1 150 442 B1**
(45) Veröffentlichungstag und Bekanntmachung des Hinweises auf die Patenterteilung: **01.10.2008**
(21) Anmeldenummer: 01108098.3
(22) Anmeldetag: 30.03.2001
(51) Int. Cl.: H04B 7/08

(54) **Antennen-Diversity-Schaltung für Rundfunkempfänger mit mehreren Empfangsteilen**
Antenna diversity circuit for radio receiver with several receiver branches
Circuit en diversité d'antennes pour récepteur radio avec plusieurs parties de réception

(30) Priorität: 28.04.2000 DE 10022740
(43) Veröffentlichungstag der Anmeldung: 31.10.2001
(73) Patentinhaber: Continental Automotive GmbH, 30165 Hannover (DE)
(72) Erfinder: Ehrhardt, Friedhelm, 36304 Alsfeld (DE)

(56) Entgegenhaltungen:
- DE-A1- 19 603 514
- US-A- 5 740 526
- PATENT ABSTRACTS OF JAPAN Bd. 018, Nr. 026 (E-1491), 14. Januar 1994 (1994-01-14) & JP 05 259950 A (NIPPON TELEGR & TELEPH CORP <NTT>), 8. Oktober 1993 (1993-10-08)

## Beschreibung

Die Erfindung betrifft eine Einrichtung zur Antennenauswahl in einer Rundfunkempfangseinrichtung mit mindestens zwei Antennen zur Speisung von mindestens zwei Rundfunkempfängern mit Antennensignalen, wobei die Antennenauswahl zur Speisung der Rundfunkempfänger automatisch in Abhängigkeit von einem aus einem Antennensignal abgeleiteten Eingangssignal erfolgt. Weiterhin betrifft die Erfindung eine Rundfunkempfangseinrichtung mit mindestens zwei Rundfunkempfängern mit einer Einrichtung zur Antennenauswahl sowie ein Verfahren zur automatischen Durchführung einer Antennenauswahl zur Speisung von mindestens zwei Funkempfängern.

Bei Rundfunkempfängern, insbesondere bei mobilen Rundfunkempfängern wie beispielsweise Autoradios, ist es bekannt, zur Verbesserung des Rundfunkempfangs mehrere Antennen vorzusehen, die über eine Einrichtung zur Antennenauswahl mit dem Rundfunkempfänger verbunden werden. Bei einem solchen als Antennen-Diversity bekannten Verfahren erfolgt bei Verschlechterung der Empfangsqualität mit der gegenwärtig ausgewählten Antenne ein Umschalten auf eine der anderen Antennen, sofern mit dieser ein verbesserter Empfang realisiert werden kann.

Aus der DE 196 03 514 A1 ist ein mobiles Funkempfangssystem mit Antennendiversity zur Mehrfachausnutzung von Antennen bzw. Antennenarrays durch verschiedenartige und beliebig viele Funkempfänger, wie beispielsweise ein Radio-Tuner, ein Fernsehton-Tuner und ein Fernsehbild-Tuner bekannt.

Aus der US 5,740,526 sind ein Verfahren und eine Vorrichtung zur Auswahl von zwei Antennen eines zellularen Mobilfunksystems bekannt.

Aus der JP 05 259950 ist ein Mobilfunksystem bekannt, bei dem mit Diversity-Verfahren eine Antennenauswahl erfolgt. Es sind mehreren Antennengruppen mit jeweils mehreren Richtantennen unterschiedlicher Ausrichtung vorhanden.

Moderne Autoradios sind zumeist zur Auswertung des von den Rundfunkanstalten ausgestrahlten RDS-Telegramms geeignet. Die RDS-Funktionen enthalten dabei die Möglichkeit der automatischen Umschaltung auf den jeweils am besten empfangenen Sender einer Rundfunkkette. Bevor das Autoradio auf eine als Alternative angegebene Frequenz umschaltet, wird zum Beispiel die Empfangsqualität auf der alternativen Frequenz geprüft und anhand des sogenannten Pl-Codes, der mit dem RDS-Telegramm übermittelt wird, geprüft, ob auf der alternativen Frequenz tatsächlich das gleiche Programm empfangen wird. Bei einem Ein-Empfänger-Radio muß dazu das Radio auf diese Frequenz umgeschaltet werden. Um die dabei auftretenden Empfangspausen zu vermeiden, werden höherwertige Autoradios mit zwei Empfängern ausgestattet. Bei Betrieb dieser beiden Empfänger an einer Antenne muß eine Entkopplung der Empfänger erfolgen, da sonst gegenseitige Beeinflussungen auftreten. Dieselbe Problematik tritt auch dann auf, wenn ein Autoradio mit mehreren Empfängern mit einer Antennen-Diversity-Schaltung versehen wird. Auch in diesem Fall werden beide Empfänger mit der selben Antenne verbunden.

Zur Entkopplung von zwei an einer gemeinsamen Antenne betriebenen Empfängern sind passive oder aktive Entkopplungsschaltungen bekannt. Abhängig von der gewählten Schaltung treten jedoch zusätzlich zur Restbeeinflussung bei passiven Entkopplungsschaltungen Verluste und bei aktiven Entkopplungsschaltungen hauptsächlich zusätzliche Probleme mit Intermodulationen auf. Weiterhin bringen sowohl passive als auch aktive Entkopplungssysteme noch zusätzliche Toleranzen in den Signalweg ein.

Aufgabe der Erfindung ist es daher, eine Einrichtung zur Antennenauswahl bei einem Mehrantennensystem zur Speisung von mindestens zwei Empfängern anzugeben, mit dem auf einfache Weise eine sichere Entkopplung der Empfängern erreicht wird. Eine weitere Aufgabe der Erfindung ist es, ein entsprechendes Verfahren zur automatischen Durchführung einer Antennenauswahl anzugeben, das eine sichere Antennenentkopplung gewährleistet.

Die erstgenannte Aufgabe wird durch eine Einrichtung zur Antennenauswahl mit den Merkmalen des Anspruchs 1 gelöst.

Während bei Autoradios nach dem Stand der Technik, die zwei Empfänger sowie eine Einrichtung zur Antennenauswahl aufweisen, die ausgewählte Antenne bzw. Antennen mit beiden Empfängern verknüpft sind, ist gemäß der Erfindung vorgesehen, dass jeder der Empfänger von einer anderen Antenne versorgt wird. Hierdurch entfällt die Notwendigkeit von Entkopplungsschaltungen vollständig. Durch die erfindungsgemäße Ausgestaltung verbleibt jedoch für den Hauptempfänger die Auswahl unter allen vorhandenen Antennen. Die Auswahl erfolgt dabei in bekannter Weise nach bekannten Antennen-Diversity-Verfahren. Für die weiteren Empfänger ist die Auswahl unter den vorhandenen Antennen dann jedoch eingeschränkt. So kann ein zweiter Empfänger von allen vorhandenen Antennen außer der mit dem Hauptempfänger verbundenen Antenne versorgt werden. Diese Einschränkung ist bei den meisten Anwendungsfällen jedoch unerheblich.

Bei den zuvor beschriebenen Rundfunkempfängern mit zwei Empfangseinheiten und einer Umschaltung auf alternative Frequenzen aufgrund von RDS-Daten arbeitet einer der Empfänger stets im Hintergrund. Der für die Ausgabe der Audio-Signale über die Lautsprecher vorgesehene Empfänger wird dabei als der Hauptempfänger angesehen, dem das volle Spektrum der vorhandenen Antennen zur Verfügung steht. Der zweite, im Hintergrund arbeitende Empfänger kann dagegen problemlos mit der beschränkten Antennenauswahl arbeiten, da hierbei kurzzeitig auftretende Empfangsstörungen durch die verbleibenden Antennen in der Regel ausreichend kompensiert werden.

In einer besonderen Ausführungsform ist vorgesehen, daß die Einrichtung zur Antennenauswahl ein Steuermodul mit mehreren Ausgängen enthält, wobei die Antennen über ein Netzwerk mit den Ausgängen des Steuermoduls und einem Antenneneingang eines Funkempfängers verbindbar sind und durch die an den Ausgängen des Steuermoduls anliegende Spannung in Verbindung mit dem Netzwerk nur Antennensignale von einer der Antennen an den Funkempfänger weitergeleitet werden. Insbesondere durch ein passives Netzwerk kann auf kostengünstige Weise eine bestimmte Antenne zur Speisung eines Empfängers ausgewählt werden, ohne daß entsprechend teure Schaltelemente eingesetzt werden müssen. Vorzugsweise ist jedem der Empfänger ein derartiges Netzwerk zugeordnet.

In einer speziellen Ausgestaltung ist vorgesehen, daß jedes der Netzwerke mehrere gleichartige Zweige enthält, wobei jeder der Zweige jeweils mit einem der Ausgänge des Steuermoduls sowie jeweils einer Antenne verbunden ist und die Zweige eines Netzwerkes einen gemeinsamen Knotenpunkt zur Verbindung des Netzwerks mit dem Funkempfänger aufweisen und weiterhin Zweige von unterschiedlichen Netzwerken, die mit demselben Ausgang des Steuermoduls verbunden sind, mit unterschiedlichen Antennen verbunden sind. Hierdurch kann bei Verwendung gleichartiger Netzwerke alleine durch die entsprechende Anbindung der einzelnen Antennen an verschiedene Zweige des Netzwerkes die gewünschte Zuordnung einer Antenne zu jeweils nur einem Empfänger erreicht werden.

Besonders kostengünstig läßt sich die Einrichtung zur Antennenauswahl als integrierte Schaltung herstellen, wobei entsprechende Anschlußmöglichkeiten für die Antennen vorzusehen sind.

In einer weiteren Ausgestaltung der Erfindung können auch die Signale von mehr als einer Antenne jeweils einem Empfänger zugeleitet werden. Hierzu kann beispielsweise in ebenfalls bekannter Weise die Summe oder Differenz der Antennensignale gebildet werden. In diesem Falle ist durch geeignete schaltungstechnische oder andere Maßnahmen dafür Sorge zu tragen, daß keine der mit einem ersten Empfänger verbundenen Antennen mit einem weiteren Empfänger verbunden sind. Hierzu bietet sich beispielsweise auch eine Steuerung durch einen Mikroprozessor an.

Ein erfindungsgemäßes Verfahren zur automatischen Durchführung einer Antennenauswahl (Antennen-Diversity) zur Speisung von mindestens zwei Funkempfängern, bei dem die Speisung jedes der Empfänger durch jede der Antennen erfolgen kann, weist die Verfahrensschritte
- Auswahl einer ersten Antenne zur Speisung eines ersten Funkempfängers aufgrund der Qualität der Eingangssignale der Antennen oder daraus abgeleiteter Signale und
- Speisung eines zweiten oder weiteren Funkempfängers mit einer zweiten oder weiteren Antenne derart, daß jeder der Funkempfänger von einer anderen Antenne gespeist wird,
auf.

Die Erfindung wird nachfolgend anhand der Zeichnung und eines Ausführungsbeispiels näher erläutert. Es zeigen:
- Figur 1: eine Prinzipdarstellung der Antennen-Diversity-Schaltung,
- Figur 2: eine Einrichtung zur Antennenauswahl mit passiven Netzwerken.

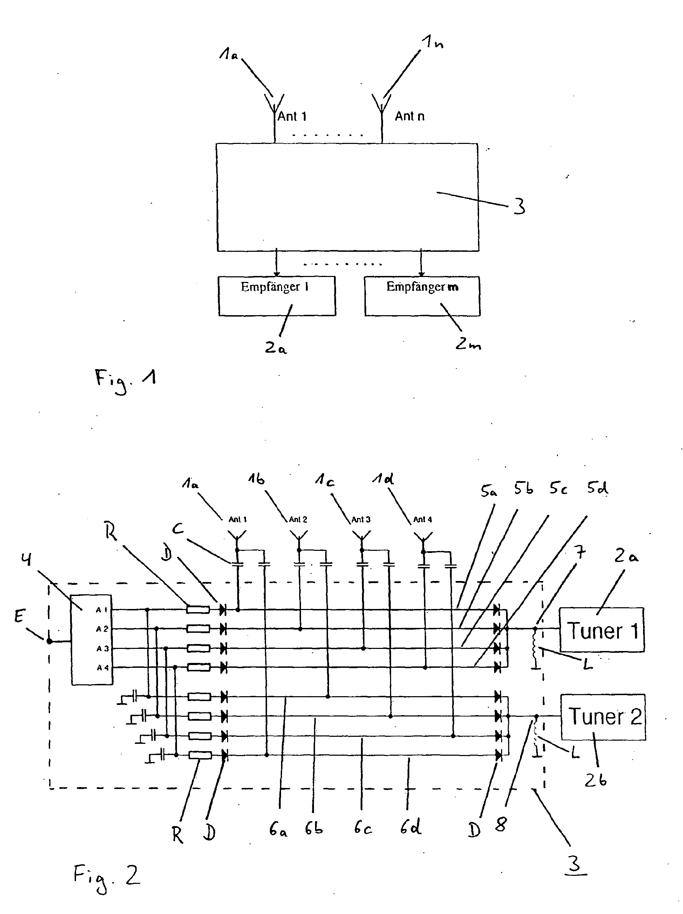

Figur 1 zeigt eine Prinzipdarstellung mit mehreren Antennen 1 und mehreren Empfängern 2 sowie einem Diversity-Modul 3, das mit den Antennen 1 und den Empfängern 2 verbunden ist. Um sicherzustellen, daß jeder Empfänger 2 von einer anderen Antenne 1 versorgt wird, darf die Anzahl n der Antennen nicht kleiner sein als die Anzahl m der Empfänger. In dem Diversity-Modul 3 erfolgt die Antennenauswahl in an sich bekannter Weise, wobei erfindungsgemäß jedoch sicherzustellen ist, daß eine Antenne jeweils nicht mehr als einen Empfänger versorgt. Zur Antennenauswahl kann dabei insbesondere ein aus der Qualität des jeweiligen Antennensignals abgeleitetes Signal, wie beispielsweise das Zwischenfrequenzsignal eines Empfängers, verwendet werden. Insofern ist eine Rückkopplung zwischen mindestens einem der Empfänger 2 und dem Diversity-Modul 3 vorgesehen, die aus dem Stand der Technik (beispielsweise Patentschriften der Internationalen Klasse H04B7/08) bekannt ist und zur Vereinfachung in den Figuren nicht dargestellt wird.

In Figur 2 ist eine spezielle Ausgestaltung des Diversity-Moduls 3 dargestellt. Das Diversity-Modul 3 enthält ein Steuermodul 4 mit einem Steuereingang E sowie zwei passive Netzwerke 5 und 6, wobei jedes der Netzwerke aus vier Zweigen 5a bis 5d bzw. 6a bis 6d besteht. Die einzelnen Zweige der Netzwerke 5, 6 enthalten jeweils einen Widerstand R sowie zwei Dioden D, die in Reihe geschaltet sind. Die Verbindung zu den Antennen 1 erfolgt jeweils zwischen den Dioden D eines Zweiges über Kondensatoren C. Die Zweige eines Netzwerkes 5, 6 weisen jeweils einen Knotenpunkt 7, 8 auf, an dem das Netzwerk 5 bzw. 6 jeweils mit einem der Empfänger 2 verbunden ist. Das Steuermodul 4 liefert an seinen Ausgängen A1 bis A4 ein Steuersignal in Abhängigkeit von der jeweils auszuwählenden Antenne. Bei dem Steuermodul kann es sich beispielsweise um das IC TEA 6101/T der Firma PHILIPS handeln. Das Steuermodul 4 ist so ausgelegt, daß jeweils nur einer der Ausgänge A1 bis A4 einen High-Pegel aufweist, während alle anderen Ausgänge einen Low-Pegel aufweisen. Jeder der Ausgänge A1 bis A4 ist mit jeweils einem Zweig der Netzwerke 5, 6 verbunden, wobei solche Zweige der Netzwerke 5, 6 mit dem gleichen Ausgang des Steuermoduls 4 verbunden sind, die mit unterschiedlichen Antennen 1 verknüpft sind. So ist beispielsweise der Ausgang A1 mit dem Zweig 5a des Netzwerkes 5 und dem Zweig 6a des Netzwerkes 6 verbunden, während der Zweig 5a mit der Antenne 1a und der Zweig 6a mit der Antenne 1 b verbunden ist.

Weist nun beispielsweise der Ausgang A1 einen High-Pegel auf, während alle anderen Ausgänge des Steuermoduls 4 einen Low-Pegel aufweisen, so werden die Zweige 5a und 6a mit den Empfängern 2a bzw. 2b verknüpft. Mit dem Zweig 5a ist die Antenne 1a verbunden, während mit dem Zweig 6a die Antenne 1b verbunden ist. Somit wird in diesem Falle der Empfänger 2a von der Antenne 1a versorgt, während der Empfänger 2b von der Antenne 1b versorgt wird. Entsprechende eindeutige Zuordnungen ergeben sich auch dann, wenn einer der anderen Ausgänge A2 bis A4 des Steuermoduls 4 einen High-Pegel aufweist, während alle anderen Ausgänge einen Low-Pegel aufweisen. Zu jedem dieser Ausgangszustände des Steuermoduls 4 gehört eine eindeutige Zuordnung von jeweils einer Antenne zu einem der Empfänger 2, wobei sichergestellt ist, daß die Empfänger 2 jeweils von verschiedenen Antennen 1 versorgt werden. Durch die Versorgung der Empfänger 2 jeweils durch verschiedene Antennen sind weitere Maßnahmen zur Entkopplung der Empfänger 2 untereinander nicht erforderlich, wobei jedoch über das Steuermodul 4 und die Netzwerke 5, 6 ein Antennen-Diversity-Verfahren gewährleistet ist.

## Patentansprüche

1. Einrichtung zur Antennenauswahl in einer Rundfunkempfangseinrichtung mit mindestens zwei Antennen (1a bis 1d) zur Speisung von mindestens zwei Rundfunkempfängern (2a, 2b) mit Antennensignalen, wobei die Antennenauswahl zur Speisung der Rundfunkempfänger (2a, 2b) automatisch in Abhängigkeit von einem aus einem Antennensignal abgeleiteten Eingangssignal erfolgt, **dadurch gekennzeichnet, dass** die Einrichtung zur Antennenauswahl Mittel enthält, durch die jede Antenne (1a bis 1d) zur Versorgung von nicht mehr als einem Rundfunkempfänger (2a, 2b) ausgewählt wird und jeder der Rundfunkempfänger (2a, 2b) von einer anderen Antenne gespeist wird.

2. Einrichtung nach Anspruch 1, **dadurch gekennzeichnet, dass** die Einrichtung ein Steuermodul (4) mit mehreren Ausgängen (A1 bis A4) enthält, wobei die Antennen (1a bis 1d) über ein Netzwerk (5, 6) mit den Ausgängen (A1 bis A4) des Steuermoduls (4) und einem Antenneneingang der Rundfunkempfänger (2a, 2b) verbindbar sind und durch die an den Ausgängen (A1 bis A4) des Steuermoduls (4) anliegende Spannung in Verbindung mit dem Netzwerk (5, 6) Antennensignale jeweils einer der Antennen (1a bis 1d) nur an jeweils einen der Rundfunkempfänger weitergeleitet werden.

3. Einrichtung nach Anspruch 2, **dadurch gekennzeichnet, dass** es sich bei dem Netzwerk (5, 6) um ein passives Netzwerk handelt

4. Einrichtung nach Anspruch 2 oder 3, **dadurch gekennzeichnet dadurch gekennzeichnet, dass** jedem der Rundfunkempfänger (2a, 2b) ein derartiges Netzwerk (5, 6) zugeordnet ist.

5. Einrichtung nach Anspruch 2, 3 oder 4, **dadurch gekennzeichnet, dass** jedes der Netzwerke (5, 6) mehrere gleichartige Zweige (5a bis 5d; 6a bis 6d) enthält, wobei jeder der Zweige (5a bis 5d; 6a bis 6d) jeweils mit einem der Ausgänge (A1 bis A4) des Steuermoduls (4) sowie jeweils einer Antenne (1a bis1d) verbunden ist und die Zweige (5a bis 5d; 6a bis 6d) eines Netzwerks (5, 6) einen gemeinsamen Knotenpunkt (7, 8) zur Verbindung des Netzwerks (5, 6) mit dem Rundfunkempfänger (2a, 2b) aufweisen, und weiterhin Zweige (5a bis 5d; 6a bis 6d) von unterschiedlichen Netzwerken (5, 6), die mit demselben Ausgang (A1 bis A4) des Steuermoduls (4) verbunden sind, mit unterschiedlichen Antennen (1a bis 1d) verbunden sind.

6. Einrichtung nach einem der vorhergehenden Ansprüche, **dadurch gekennzeichnet, dass** das Steuermodul (4) und die Netzwerke (5, 6) Bestandteil einer integrierten Schaltung sind.

7. Rundfunkempfangseinrichtung mit mindestens zwei Rundfunkempfängern (2a, 2b) und mit einer Einrichtung zur Antennenauswahl nach einem der Ansprüche 1 bis 6.

8. Verfahren zur automatischen Durchführung einer Antennenauswahl (Antennen-Diversity) zur Speisung von mindestens zwei Rundfunkempfängern, bei dem die Speisung jedes der Rundfunkempfänger durch jede der Antennen erfolgen kann, mit den Verfahrensschritten:
- Auswahl einer ersten Antenne zur Speisung eines ersten Rundfunkempfängers aufgrund der Qualität der Empfangssignale der Antennen oder daraus abgeleiteter Signale und
- Speisung eines zweiten oder weiteren Rundfunkempfängers mit einer zweiten oder weiteren Antenne derart, dass jeder der Rundfunkempfänger von einer anderen Antenne gespeist wird, und jede Antenne zur Versorsung von nicht mehr als einem Rundfunkempfänger ausgewählt wird.

## Claims

1. Device for antenna selection in a radio receiving device comprising at least two antennas (1a to 1d) for feeding at least two radio receivers (2a, 2b) with antenna signals, the antenna selection feeding the radio receivers (2a, 2b) occurring automatically in dependence on an input signal derived from an antenna signal, **characterized in that** the device for antenna selection contains means by means of which each antenna (1a to 1d) is selected for supplying no more than one radio receiver (2a, 2b) and each of the radio receivers (2a, 2b) is fed by a different antenna.

2. Device according to Claim 1, **characterized in that** the device contains a control module (4) having a number of outputs (A1 to A4), wherein the antennas (1a to 1d) can be connected to the outputs (A1 to A4) of the control module (4) and to an antenna input of the radio receivers (2a, 2b) via a network (5, 6) and by means of the voltage present at the outputs (A1 to A4) of the control module (4), in conjunction with the network (5, 6), antenna signals of in each case one of the antennas (1a to 1d) are only forwarded to in each case one of the radio receivers.

3. Device according to Claim 2, **characterized in that** the network (5, 6) is a passive network.

4. Device according to Claim 2 or 3, **characterized in that** such a network (5, 6) is allocated to each one of the radio receivers (2a, 2b).

5. Device according to Claim 2, 3 or 4, **characterized in that** each of the networks (5, 6) contains a number of similar branches (5a to 5d; 6a to 6d), wherein each of the branches (5a to 5d; 6a to 6d) is in each case connected to one of the outputs (A1 to A4) of the control module (4) and to in each case one antenna (1a to 1d) and the branches (5a to 5d; 6a to 6d) of a network (5, 6) have a common node (7, 8) for connecting the network (5, 6) to the radio receiver (2a, 2b) and furthermore branches (5a to 5d; 6a to 6d) of different networks (5, 6), which are connected to the same output (A1 to A4) of the control module (4), are connected to different antennas (1a to 1d) .

6. Device according to one of the preceding claims, **characterized in that** the control module (4) and the networks (5, 6) are a component of an integrated circuit.

7. Radio receiving device comprising at least two radio receivers (2a, 2b) and comprising a device for antenna selection according to one of Claims 1 to 6.

8. Method for automatically carrying out an antenna selection (antenna diversity) for feeding at least two radio receivers, in which each of the radio receivers can be fed by each of the antennas, comprising the method steps:
- selecting a first antenna for feeding a first radio receiver on the basis of the quality of the received signals of the antennas or signals derived therefrom and
- feeding a second or further radio receiver with a second or further antenna, in such a manner that each of the radio receivers is fed by a different antenna and each antenna is selected for supplying no more than one radio receiver.

## Revendications

1. Dispositif destiné à la sélection des antennes dans un système de réception radio comportant au moins deux antennes (1a à 1d) et permettant d'alimenter au moins deux récepteurs radio (2a, 2b) en signaux d'antenne, où la sélection des antennes permettant d'alimenter les récepteurs radio (2a, 2b) se fait automatiquement en fonction d'un signal d'entrée tiré d'un signal d'antenne, **caractérisé par le fait que** le dispositif destiné à la sélection des antennes comprend des moyens grâce auxquels chaque antenne (1a à 1d) est sélectionnée pour ne pas alimenter plus d'un seul récepteur radio (2a, 2b) et chaque récepteur radio (2a, 2b) est alimenté par une autre antenne.

2. Dispositif selon la revendication 1, **caractérisé par le fait que** le dispositif renferme un module de commande (4) ayant plusieurs sorties (A1 à A4), les antennes (1a à 1d) pouvant être raccordées, par l'intermédiaire d'un réseau de connexion (5, 6), aux sorties (A1 à A4) du module de commande (4) et à une entrée d'antenne des récepteurs radio (2a, 2b) et des signaux d'antenne de chacune des antennes (1a à 1d) pouvant être retransmis, en relation avec le réseau de connexion (5, 6), dans chaque cas, seulement à l'un des récepteurs radio grâce à la tension qui se présente aux sorties (A1 à A4) du module de commande (4).

3. Dispositif selon la revendication 2, **caractérisé par le fait que** le réseau de connexion (5, 6) est un réseau de connexion passif.

4. Dispositif selon la revendication 2 ou 3, **caractérisé par le fait qu'**un tel réseau de connexion (5, 6) est affecté à chaque récepteur radio (2a, 2b).

5. Dispositif selon la revendication 2, 3 ou 4, caractér i s é par le fait que chaque réseau de connexion (5, 6) comprend plusieurs branches identiques (5a à 5d; 6a à 6d), chaque branche (5a à 5d; 6a à 6d) étant reliée à l'une des sorties (A1 à A4) du module de commande (4) ainsi qu'à une antenne (1a à 1d) et les branches (5a à 5d; 6a à 6d) d'un réseau de connexion (5, 6) ayant un noeud commun (7, 8) pour le raccordement du réseau de connexion (5, 6) au récepteur radio (2a, 2b), et, en outre, des branches (5a à 5d; 6a à 6d) de réseaux de connexion (5, 6) différents, qui sont reliées à la même sortie (A1 à A4) du module de commande (4), sont reliées à des antennes différentes (1a à 1d).

6. Dispositif selon l'une des revendications précédentes, **caractérisé par le fait que** le module de commande (4) et les réseaux de connexion (5, 6) font partie d'un circuit intégré.

7. Dispositif de réception radio comportant au moins deux récepteurs radio (2a, 2b) et un dispositif destiné à la sélection des antennes selon l'une des revendications 1 à 6.

8. Procédé permettant d'exécuter automatiquement une sélection d'antenne (diversité d'antenne) et destiné à alimenter au moins deux récepteurs radio en signaux d'antenne, où l'alimentation de chaque récepteur radio peut se faire par chacune des antennes, comportant les phases suivantes:
- sélection, sur la base de la qualité des signaux de réception des antennes ou des signaux qui en sont tirés, d'une première antenne destinée à alimenter un premier récepteur radio et
- alimentation d'un deuxième ou de plusieurs autres récepteurs radio par une deuxième ou par plusieurs autres antennes de telle sorte que chaque récepteur radio est alimenté par une autre antenne et que chaque antenne est sélectionnée pour alimenter seulement un seul récepteur radio.
